# EUROPÄISCHE PATENTANMELDUNG

(11) **EP 1 279 629 A1**
(43) Veröffentlichungstag der Anmeldung: **29.01.2003**
(21) Anmeldenummer: 02002654.8
(22) Anmeldetag: 06.02.2002
(51) Int. Cl.: B65G 39/16, B65H 23/038, G03G 15/00

(54) **Verfahren und Regelungseinrichtung für die Bandlaufregelung**

(30) Priorität: 23.07.2001 DE 10135767
(71) Anmelder: NexPress Solutions LLC, Rochester, New York 14653-7001 (US)
(72) Erfinder: Jader, Lennardt, 24229 Strande (DE)
(74) Vertreter: Lauerwald, Jörg

(57) **Zusammenfassung**

Die Erfindung bezieht sich auf ein Verfahren zum Regeln der Position eines Transportbands oder eines Webs (10) in Querrichtung zur Laufrichtung des Webs während des Betriebs des Webs, insbesondere für Druckmaschinen. Bekannte Lösungsmöglichkeiten mit der Verwendung von balligen Rollen als Träger des Transportbands führen zu Spannungen im Material des Transportbands und können dieses beschädigen. Aufgabe der Erfindung ist es, ein Verfahren und eine Regelungseinrichtung bereitzustellen, welche ein Transportband (10) in Querrichtung zu seiner Laufrichtung exakt ausrichten. Hierzu wird ein Rand des Transportbands oder Webs mittels einer Sensoreinrichtung (1) erfasst, die von der Sensoreinrichtung erfassten Werte werden zu einer Schwenkeinrichtung (2), bevorzugt eine Hebe- und Senkeinrichtung, bei wenigstens einer Seite des Webs übertragen, welche die Seite des Webs als Reaktion auf die erhaltenen Werte hebt oder senkt und dadurch eine Korrektur der Querlage des Webs und des Bandlaufs bewirkt.

## Beschreibung

Die Erfindung bezieht sich auf ein Verfahren zum Regeln des Bandlaufs eines Transportbands oder eines Webs in Querrichtung zur Laufrichtung des Webs, insbesondere für Druckmaschinen, und auf eine Regelungseinrichtung.

Eine verbreitete und bevorzugte Möglichkeit des Transports verschiedenster Güter ist, ein Transportband um Rollen zu spannen und die Güter auf der Oberfläche des Transportbands zu befördern, welches durch die Rollen angetrieben ist. Bei manchen Anwendungen besteht eine Schwierigkeit darin, dass sich das Transportband bei der Bewegung in Querrichtung verschiebt, wodurch sich das Transportband von den Rollen ablösen kann. Vor allen Dingen in der Drucktechnik ist eine hochgenaue Ausrichtung des Transportbands, welches auch Web genannt wird, in Querrichtung von großer Bedeutung, weil die kleine Fläche zwischen den über dem Web angeordneten Druckzylindern und dem Web, das sogenannte Nip oder Druckspalt, beim Druck exakt zu einem Bedruckstoff auf dem Web ausgerichtet sein muss, um Druckfehler zu vermeiden. Bisher wird die genaue Ausrichtung des Webs durch ballige Rollen erreicht, um welche das Web gespannt ist. In der Mitte weisen die Rollen einen größeren Durchmesser als an deren Außenseiten auf. Das Web behält hierdurch beim Umlaufen der Rollen seine Querlage. Nachteilig bei diesem Lösungsvorschlag ist jedoch, dass das Web durch die ballige Ausformung der Rollen bei längerer Laufzeit Schaden nimmt und Risse bildet. Ferner kann der transportierte Bedruckstoff durch Verknicken an den balligen Rollen beschädigt werden.

Aufgabe der Erfindung ist daher, ein Verfahren und eine Regeleinrichtung bereitzustellen, welche ein Transportband in Querrichtung zu seiner Laufrichtung exakt ausrichtet und die vorstehenden Nachteile vermeidet.

Die Aufgabe der Erfindung wird durch die Merkmale des Verfahrensanspruchs 1 sowie des Vorrichtungsanspruchs 3 gelöst. Hierzu wird die Position eines Randes des Webs mittels einer Sensoreinrichtung erfasst und die von der Sensoreinrichtung erfassten Werte zu einer Schwenkeinrichtung übertragen, welche einen Rand des Webs als Reaktion auf die erhaltenen Werte schwenkt.

Vorteilhafte Ausführungsformen sind in den Unteransprüchen aufgeführt.

Mit besonders wenig Kraftaufwand und gezielt läßt sich der Schwenkvorgang erzielen, wenn die Schwenkeinrichtung an eine Umlenkrolle am Web greift und diese hebt und senkt. Ferner ist der Schwenkvorgang hierbei unabhängig von der Bewegung anderer Teile.

Es folgt eine detaillierte Beschreibung der Erfindung mit Bezug auf die Figuren.
- **Fig. 1**: zeigt eine perspektivische Ansicht eines Ausschnitts eines Rahmens einer Druckmaschine mit aufgespanntem Web und einem Sensor mit Schwenkeinrichtung gemäß einer Ausführungsform der Erfindung,
- **Fig. 2**: zeigt eine perspektivische Ansicht der Schwenkeinrichtung nach Fig. 1.

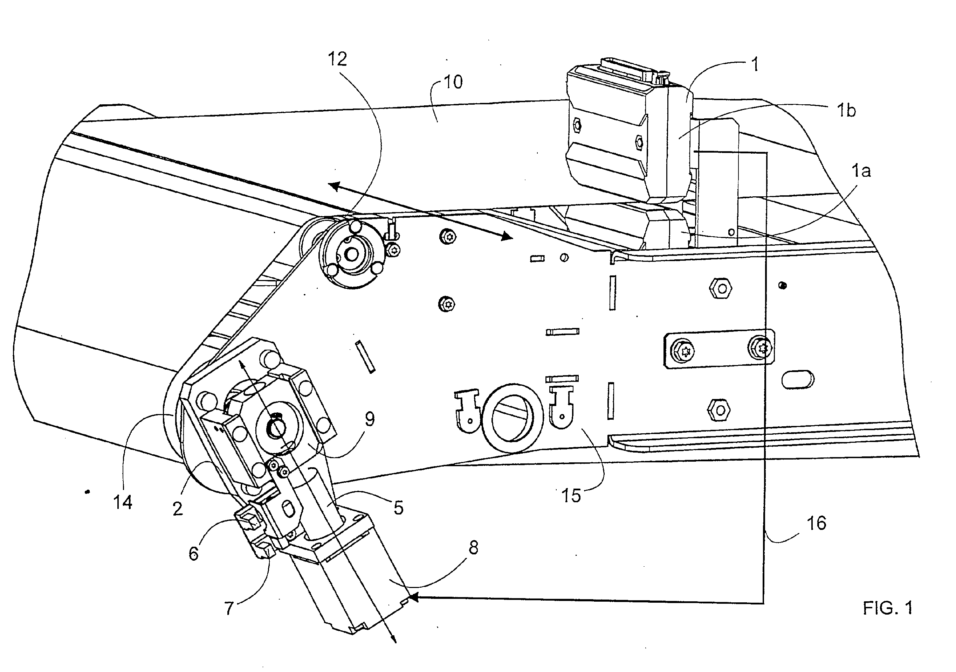

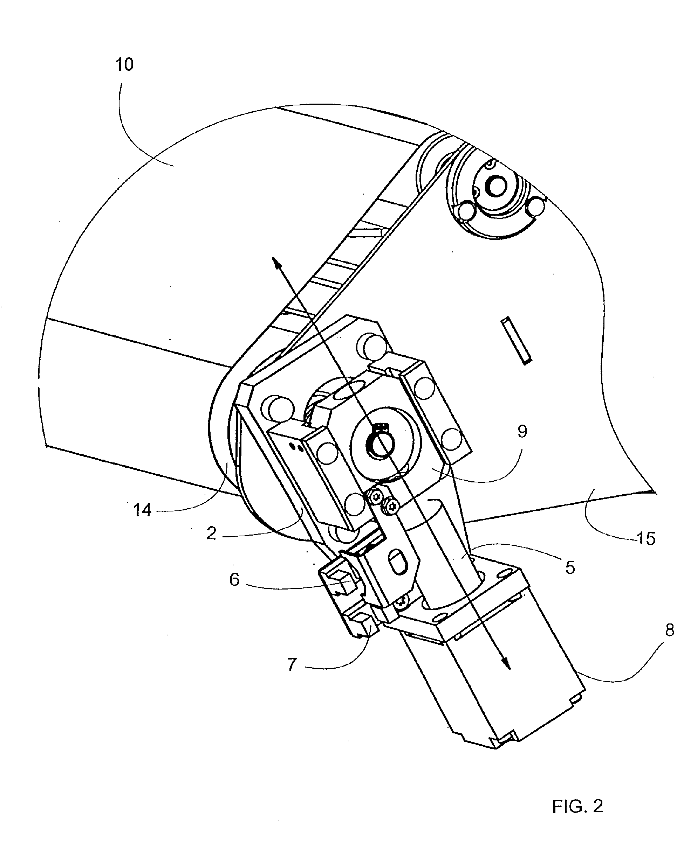

In Fig. 1 ist einen Ausschnitt einer Druckmaschine dargestellt mit einem Rahmen 15, um den ein Transportband oder Web 10 gespannt ist. Das Web 10 ist gewöhnlich ein Endlosband aus Kunststoff und kann transparent ausgebildet sein. Der Rahmen 15 befindet sich innerhalb der Druckmaschine, erstreckt sich in Längsrichtung durch diese und umfasst einen gegenüberliegenden Gegenrahmen. An einem Ende des Rahmens 15 befinden sich eine erste Umlenkrolle 12 und eine zweite Umlenkrolle 14, die am Rahmen 15 und entsprechend am gegenüberliegenden nicht dargestellten Gegenrahmen befestigt sind; weitere Rollen sind nicht dargestellt. Die erste Umlenkrolle 12 und die zweite Umlenkrolle 14 können zylindrisch ausgebildet sein und sind in Längsrichtung des Rahmens 15 versetzt und höhenversetzt zueinander angeordnet, wie in Fig. 1 ersichtlich. Wenigstens eine dem Rahmen 15 zugeordnete Rolle ist angetrieben und bewegt dadurch das an den Rollen anliegende Web 10. Eine Sensoreinrichtung 1 befindet sich oberhalb und unterhalb des Webs 10. Die Sensoreinrichtung 1 ist mit einer Schwenkeinrichtung 2 verbunden, die am Rahmen 15 angebracht ist und mit einer Seite der zweiten Umlenkrolle 14 in Wirkverbindung steht. Die Schwenkeinrichtung 2 ist hierbei als Heb- und Senkeinrichtung ausgebildet und umfasst im Wesentlichen einen Schrittmotor 8 oder Aktuator zum Heben und Senken einer Spindel 5. Der Schrittmotor 8 weist eine Schrittweite oder Empfindlichkeit von etwa 210 µm auf. Die Spindel 5 steht über einen Gleitstein 9 in Wirkverbindung mit der zweiten Umlenkrolle 14 und hebt oder senkt diese an einer Seite. Zur Begrenzung des Hubs der Spindel 5 sind ferner eine erste Begrenzungseinrichtung 6 und eine zweite Begrenzungseinrichtung 7 vorgesehen, die den Schrittmotor 8 bei Überschreiten eines bestimmten Hubs stoppen. Die Begrenzungseinrichtungen 6, 7 sind beispielhaft als Lichtschranken ausgebildet. Fig. 2 zeigt einen Ausschnitt in Bezug auf Fig. 1 mit der Schwenkeinrichtung 2, die als Heb- uns Senkeinrichtung ausgebildet ist, dem Rahmen 15, dem Web 10, der ersten Umlenkrolle 12 und der zweiten Umlenkrolle 14. Im folgenden ist die Funktionsweise der Erfindung anhand der Fig. 1 und Fig. 2 beschrieben. Das Web 10 bewegt sich mit hoher Geschwindigkeit um die Rollen des Rahmens 15 innerhalb der Druckmaschine und transportiert den Bedruckstoff (nicht dargestellt) vom Anleger zum Ausleger der Druckmaschine. Oberhalb des Webs 10 sind Druckmodule (nicht dargestellt) angeordnet, welche das Druckbild auf den transportierten Bedruckstoff aufbringen. Die Druckmodule umfassen rotierende Druckrollen, welche das Druckbild auf den Bedruckstoff abrollen. Besonders wichtig in diesem Zusammenhang ist, dass die Druckrollen in Längs- und in Querrichtung exakt ausgerichtet sind. Längsverschiebungen der Druckrollen, d.h. Verschiebungen in Bewegungsrichtung des Webs 10, in Bezug auf den Bedruckstoff oder das Web 10 werden auf verschiedene hier nicht beschriebene Weise korrigiert. Querverschiebungen, d.h. Verschiebungen des Web 10 in Querrichtung zu seiner Laufrichtung, werden wie folgt korrigiert. Die Sensoreinrichtung 1 umfasst einen optischen Sender 1a und einen optischen Empfänger 1b mit einem CCD (Charge-Coupled Device)-Sensor mit einer CCD-Reihe an einer Fläche, welche dem Web 10 zugewendet ist. Zwischen der Sensoreinrichtung 1 verläuft das Web 10 derart, dass das Web 10 den Raum zwischen dem Sender 1a und dem Empfänger 1b teilweise abdeckt. Die Fläche des optischen Senders 1a mit einer Strahlungsquelle und eine Fläche des Empfängers 1b mit der CCD-Reihe der Sensoreinrichtung 1 sind einander zugewendet; zwischen diesen befindet sich das Web 10. Lichtstrahlung der Strahlungsquelle des Senders 1a wird ausgesendet und erreicht im Wesentlichen den Abschnitt der CCD-Reihe des optischen Empfängers 1b, welcher nicht vom Web 10 abgedeckt ist. Die Strahlung, welche vom optischen Sender 1a auf das Web 10 trifft, wird im Wesentlichen reflektiert und erreicht den Empfänger 1b im Wesentlichen nicht. Auf diese Weise wird am Empfänger 1b der Sensoreinrichtung 1 ein Kontrast zwischen dem Bereich erzielt, der vom Web 10 abgedeckt ist, und dem Bereich, der nicht vom Web 10 abgedeckt ist. Die Querausrichtung des Webs 10 ist eindeutig bestimmbar. Falls der Kontrast aufgrund der Transparenz des Webs 10 größer gewünscht ist, kann bei einer Variante die Lichtintensitäts-änderung zwischen bedeckter und unbedeckter Fläche dadurch erhöht werden, dass jeweils ein linearer Polarisator dem optischen Sender 1a und dem optischen Empfänger 1b zugeordnet ist, wobei die Polarisatoren gekreuzt zueinander angeordnet sind. Die vom Web 10 unbedeckten Bereiche des optischen Empfängers 1b empfangen wegen der Polarisation kein Licht, während die vom Web 10 bedeckten Bereiche des Empfängers 1b aufgrund der Änderung des Polarisationszustands des Lichts im transparenten Web 10 Licht empfangen. Außerdem kann bei einer weiteren Variante jedem Polarisator ein λ/4-Plättchen zugeordnet werden, wobei der Lichtempfang am Empfänger 1b unabhängig von der optischen Hauptachsenlage des Webs 10 ist und Lageänderungen des Webs 10 nicht die Lichtintensität verringern. Aus der am optischen Empfänger 1b vorliegenden Information, welche Bereiche des Empfängers 1b Licht empfangen und welche Bereiche nicht, werden elektrische Signale erzeugt, die über eine Verbindungsleitung 16 zwischen dem Empfänger 1b und der Schwenkeinrichtung 2 zu einer Steuerungseinrichtung der Schwenkeinrchtung 2 übertragen werden, welche den Schrittmotor 8 steuert. Stimmen die übertragenen Informationen mit in der Steuerungseinrichtung der Schwenkeinrichtung 2 gespeicherten Informationen über die Querausrichtung des Webs 10 überein, wird die Schwenkeinrichtung 2 nicht angesteuert. In diesem Fall befindet sich das Web 10 in der für die Bedruckung optimalen gewünschten Querlage ohne Verschiebungen. Rutscht das Web 10 jedoch während des Laufs um die Rollen des Rahmens 15 nach links oder rechts, verändern sich die durch Bestrahlung des Empfängers 1b erhaltenen Lichtinformationen, welche an die Steuerungseinrichtung der Schwenkeinrichtung 2 übertragen werden. Ein Vergleich der übertragenen Informationen mit gespeicherten Daten liefert ein Ergebnis, welches als Grundlage dazu dient, den Schrittmotor 8 anzusteuern, welcher die Spindel 5 in Richtung des Pfeils an der Schwenkeinrichtung 2 nach den Fig. 1 und Fig. 2 entweder anhebt oder absenkt. Varianten der Erfindung sehen weitere Bewegungsrichtungen der Umlenkrollen 12, 14 durch die Schwenkeinrichtung 2 vor, etwa axial zu den Umlenkrollen 12, 14. Die Spindel 5 steht in Wirkverbindung mit der zweiten Umlenkrolle 14 und hebt und senkt die Achse der zweiten Umlenkrolle 14 im gleichen Maße, wie die Spindel 5 angehoben bzw. gesenkt wird. Dies geschieht mit einem Gleitstein 9 in einer Parallelführung, der von der Spindel 5 angetrieben ist. Der Gleitstein 9 hebt oder senkt die Achse der Umlenkrolle 14. Die Achse verschiebt sich daher im Verhältnis zum Gleitstein 9. Während bei einer Ideallage der Achse der Umlenkrolle 14 die Achse orthogonal zum Gleitstein 9 erstreckt, ändert sich die Winkellage der Achse der Umlenkrolle 14 im Verhältnis zum Gleitstein 9 beim Heben und Senken der Schwenkeinrichtung 2. Als Ausgleich der veränderten Winkellage oder Winkelversatz der Achse der Umlenkrolle 14 durch das Heben und Senken ist die Umlenkrolle 14 mit einem Pendellager gelagert, welches den Winkelversatz ausgleicht und eine geeignete Lagerung der Umlenkrolle 14 gewährleistet. Die vorstehend beschriebene Anordnung ist stabil, zuverlässig und weist eine lange Lebensdauer auf, welche auf 1,5 Millionen Hübe der Schwenkeinrichtung 2 geschätzt wird. Aus dieser Anzahl von Hüben berechnet sich eine Lebensdauer, welche höher liegt als die Lebensdauer einer Druckmaschine. Die Ausfallwahrscheinlichkeit der Regelungseinrichtung ist daher niedrig. Durch das Anheben oder Absenken der Achse der zweiten Umlenkrolle 14 wird die Querausrichtung des Webs 10 bezüglich seiner Laufrichtung beeinflusst. Wenn eine Verschiebung des Webs 10 nach vorne bezüglich der Fig. 1 und Fig. 2 vorliegt, wobei hierbei ausschließlich die Querausrichtung gemäß dem Richtungspfeil am Web 10 betrachtet wird, was wie vorstehend beschrieben festgestellt wird, wird das Web 10 nach hinten bezüglich der Fig. 1 und Fig. 2 verschoben, da die Schwenkeinrichtung 2 die zweite Umlenkrolle 14 an ihrer vorderen Seite bezüglich der Fig. 1 und Fig. 2 anhebt. Der umgekehrte Fall wird in ähnlicher Weise geregelt. Stellt die Steuerungseinrichtung der Schwenkeinrichtung 2 mittels der Informationen der Sensoreinrichtung 1 fest, dass das Web 10 bezüglich des Richtungspfeils nach den Fig. 1 und Fig. 2 nach hinten verschoben ist, wird die Spindel 5 um eine geeignete Strecke nach unten bewegt oder abgesenkt, wobei auch der vordere Teil der Achse der zweiten Umlenkrolle 14 nach unten bewegt oder abgesenkt wird. Dies bewirkt, dass das Web 10 in dem Maße, welcher der Absenkbewegung der zweiten Umlenkrolle 14 zugeordnet ist und der Verschiebung des Webs 10 nach hinten entspricht, in die Richtung nach vorne korrigiert wird. Die Achse der Umlenkrolle 14 verändert bei den Heb- und Senkbewegungen ihre gewöhnliche horizontale Lage ohne Querverschiebungen des Webs 10 und kippt in die jeweilige Richtung. Diese Kippbewegung der Achse der Umlenkrolle 14 wird durch ein Pendellager ermöglicht, das es gestattet, dass eine Seite an einem Endbereich der Umlenkrolle 14 am ursprünglichen Ort bleibt, während die andere Seite am entgegengesetzten Endbereich der Umlenkrolle 14 ihren ursprünglichen Ort verändert. Die Schwenkeinrichtung 2 weist ferner eine erste Lichtschranke 6 und eine zweite Lichtschranke 7 auf, welche dazu dienen, die Heb- und Absenkbewegung oder den Hub der Spindel 5 zu begrenzen, da ein zu starkes Heben oder Absenken der zweiten Umlenkrolle 14 in Bezug auf das um die Rollen laufende Web 10 problematisch ist. Denkbar und vom Umfang des Schutzbereiches der Anmeldung umfasst ist, dass die Schwenkeinrichtung 2 an anderen Rollen oder Stellen der Druckmaschine angeordnet ist. Ferner ist die Verwendung mehrerer Schwenkeinrichtungen 2 in einer Druckmaschine ausführbar. Die Erfindung ist nicht auf die Anwendung bei Druckmaschinen beschränkt, sondern kann bei allen Transportbändern verwendet werden, deren Ausrichtung in Querrichtung zur Transportbandbewegung von Bedeutung ist.

## Patentansprüche

1. Verfahren zum Regeln des Bandlaufs eines Transportbands oder eines Webs (10) in Querrichtung zur Laufrichtung des Webs (10), **gekennzeichnet durch** ein Erfassen der Position eines Randes des Webs (10) mittels einer Sensoreinrichtung (1) und ein Übertragen der von der Sensoreinrichtung (1) erfassten Werte zu einer Schwenkeinrichtung (2), welche einen Rand des Webs (10) als Reaktion auf die erhaltenen Werte schwenkt.

2. Verfahren nach Anspruch 1, **dadurch gekennzeichnet, dass** die Schwenkeinrichtung (2) eine Umlenkrolle (12, 14) am Web (10) hebt oder senkt.

3. Regelungseinrichtung für die Bandlaufregelung eines Transportbands oder Webs (10), vorzugsweise zum Anwenden des Verfahrens nach Anspruch 1, **gekennzeichnet durch** eine Sensoreinrichtung (1) bei einem Transportband oder Web (10) zum Erfassen der Position eines Randes des Webs (10) sowie eine Schwenkeinrichtung (2) des Webs (10), welche mit einer Umlenkrolle (12, 14) in Wirkverbindung steht.

4. Regelungseinrichtung nach Anspruch 3, **dadurch gekennzeichnet, dass** die Schwenkeinrichtung (2) ein Pendellager umfasst.

5. Regelungseinrichtung nach Anspruch 3 oder 4, **dadurch gekennzeichnet, dass** die Schwenkeinrichtung (2) eine Spindel (5) und einen durch diese bewegten Gleitstein (9) aufweist.

6. Regelungseinrichtung nach einem der Ansprüche 3 bis 5, **dadurch gekennzeichnet, dass** der Hub der Spindel (5) der Schwenkeinrichtung (2) in Richtung des Anhebens und in Richtung des Absenkens durch jeweils eine Begrenzungseinrichtung (6, 7) beschränkt ist.

7. Regelungseinrichtung nach einem der Ansprüche 3 bis 6, **dadurch gekennzeichnet, dass** die Sensoreinrichtung (1) einen optischen Sender (1a) und einen optischen Empfänger (1b) umfasst und bei einem Rand des Webs (10) angeordnet ist.
